# EUROPÄISCHE PATENTSCHRIFT

(11) **EP 1 791 738 B1**
(45) Veröffentlichungstag und Bekanntmachung des Hinweises auf die Patenterteilung: **29.12.2010**
(21) Anmeldenummer: 05786898.6
(22) Anmeldetag: 20.09.2005
(51) Int. Cl.: B60T 8/32, B60T 13/66, B60T 17/22

(54) **VERFAHREN UND VORRICHTUNG ZUM UNTERSTÜTZEN EINES BREMSENSYSTEMS BEI VERMINDERTER WIRKSAMKEIT**
METHOD AND DEVICE FOR SUPPORTING A BRAKE SYSTEM IN CASE OF REDUCED EFFECTIVENESS
PROCEDE ET SYSTEME POUR ASSISTER UN DISPOSITIF DE FREINAGE EN CAS DE BAISSE D'EFFICACITE

(30) Priorität: 24.09.2004 DE 102004046380
(43) Veröffentlichungstag der Anmeldung: 06.06.2007
(73) Patentinhaber: Continental Teves AG & Co. oHG, 60488 Frankfurt (DE)
(72) Erfinder: KUZEL, Thomas, 63538 Gross-Krotzenburg (DE); UMMER, Bernd, 65812 Bad Soden (DE); ESSLINGER, Holger, 55232 Alzey (DE)
(86) Internationale Anmeldenummer: PCT/EP2005/054684
(87) Internationale Veröffentlichungsnummer: WO 2006/032657

(56) Entgegenhaltungen:
- DE-A1- 10 137 273
- DE-A1- 10 238 427
- US-B1- 6 226 586

## Beschreibung

Die Erfindung betrifft ein Verfahren zum Erhöhen der Bremswirkung bei einem Kraftfahrzeug mit einer hydraulischen Bremsanlage, bei dem im Falle einer verminderten Wirksamkeit der Bremsanlage durch ein Einschalten einer Energieversorgungseinheit ein Bremsdruck in wenigstens einer Radbremse erhöht wird.

Die Erfindung betrifft zudem eine zur Durchführung des Verfahrens geeignete Vorrichtung.

Hydraulische Bremsanlagen weisen bei hoher thermischer Belastung, bei einem Einfluss von Salzlösung und bei starkem Verschleiß eine eingeschränkte Wirksamkeit auf, so dass die Bremsanlage selbst bei einem hohen durch den Fahrer eingestellten Vordruck innerhalb des Hauptbremszylinders keine ausreichende Verzögerung des Fahrzeugs bewirkt. Die Verminderung der Bremswirkung bei hohen Betriebstemperaturen wird dabei auch als Fading bezeichnet.

In den oben dargestellten Fällen resultiert die verminderte Bremswirkung der Fahrzeugbremsanlage jedoch insbesondere aus einem verminderten Reibungskoeffizienten zwischen den Bremsbelägen und der Bremsscheibe, so dass ein besonders Bremsdruck erforderlich ist um das Fahrzeug wirkungsvoll abzubremsen.

Aus der deutschen Offenlegungsschrift DE 102 38 427 A1 ist hierzu ein Verfahren gleicher Art bekannt, bei dem im Falle einer eingeschränkten Wirksamkeit der Fahrzeugbremse durch das Zuschalten einer Energieversorgungseinheit der Bremsdruck bzw. die Bremskraft in den Radbremsen erhöht wird, indem Hydraulikflüssigkeit aus dem Hauptbremszylinder in die Radbremsen gepumpt wird. Ein derartiges Verfahren wird auch als FBS-Funktion (FBS: Fading Brake Support) bezeichnet.

Die Aktivierung der Energieversorgungseinheit erfolgt bei der FBS-Funktion dann, wenn der durch den Fahrer eingestellte Vordruck im Hauptbremszylinder eine Aktivierungsschwelle übersteigt, die in Abhängigkeit der Fahrzeugverzögerung ermittelt wird. Die Energieversorgungseinheit wird somit zugeschaltet, wenn die tatsächliche Fahrzeugverzögerung die aufgrund des eingestellten Vordrucks bei einwandfrei funktionierender Bremsanlage erwartete Fahrzeugverzögerung um einen bestimmten Wert unterschreitet.

Die Energieversorgungseinheit wird üblicherweise abgeschaltet, wenn der Vordruck in dem Hauptbremszylinder unter einen vorgegebenen Schwellenwert fällt, da in diesem Fall insbesondere davon ausgegangen wird, dass der Fahrer das Bremspedal gelöst und damit den Bremsvorgang beendet hat.

Hierbei besteht jedoch das Problem, dass oftmals soviel Hydraulikflüssigkeit aus dem Hauptbremszylinder in die Radbremsen gepumpt wird, dass es in dem Hauptbremszylinder zu einem Druckabfall kommt, ohne dass der Fahrer das Bremspedal löst.

Dies führt dann zu einer Abschaltung der Energieversorgungseinheit, obwohl der Fahrer den Bremsvorgang fortsetzt. Bei fortwährender Bremsenbetätigung durch den Fahrer wird die Energieversorgungseinheit zwar wieder angeschaltet, wenn der der Druck in dem Hauptbremszylinder nach dem Zufluss von Bremsflüssigkeit aus den Radbremsen wieder über die Aktivierungsschwelle angestiegen ist, insgesamt ergibt sich jedoch eine verringerte mittlere Bremswirkung und damit ein längerer Bremsweg.

Ferner sind die Pedalrückwirkung und die Geräuschentwicklung bei einem sehr häufigen An- und Ausschalten der Energieversorgungseinheit für den Fahrer mit einer höheren Frequenz und damit unangenehmer spürbar.

Es ist daher eine Aufgabe der vorliegenden Erfindung, die dargestellten Nachteile des Standes der Technik zu überwinden, und dabei insbesondere ein Verfahren der eingangs genannten Art sowie eine Vorrichtung zur Durchführung des Verfahrens so weiterzuentwickeln, dass der Bremsweg verkürzt wird.

Erfindungsgemäß wird diese Aufgabe durch ein Verfahren mit den Merkmalen des Patentanspruchs 1 sowie durch eine Vorrichtung mit den Merkmalen des Patentanspruchs 7 gelöst.

Nach der Erfindung ist es dabei vorgesehen, dass ein Verfahren der eingangs genannten Art so durchgeführt wird, dass bei eingeschalteter Energieversorgungseinheit überprüft wird, ob ein Bremsdruck in einem Hauptbremszylinder einen vorgegebenen Schwellenwert erreicht, und dass die Energieversorgungseinheit nach Ablauf einer vorgegebenen Zeitdauer, die zu dem Zeitpunkt, zu dem festgestellt wird, dass der Bremsdruck den vorgegebenen Schwellenwert erreicht, beginnt, abgeschaltet wird.

Die Erfindung basiert somit auf der Idee, die Energieversorgungseinheit nicht unmittelbar bei einem Abfall des Drucks in dem Hauptbremszylinder abzuschalten, sondern den Betrieb der Energieversorgung auch nach einem Druckabfall unter einen vorgegebenen Schwellenwert für eine vorgegebene endliche Zeitdauer aufrecht zu erhalten. Während dieser Zeitdauer kann dabei Hydraulikflüssigkeit aus einem mit dem Hauptbremszylinder verbundenen Vorrats- bzw. Ausgleichsbehälter in den Hauptbremszylinder nachströmen.

Hierdurch wird erreicht, dass der erhöhte Radbremsdruck auch nach einem Druckabfall in dem Hauptbremszylinder für eine vorgegebene Zeitdauer aufrechterhalten bleibt, während des bei dem Verfahren nach dem Stand der Technik vorgesehen ist, die Energieversorgungseinheit bei einem Druckabfall in dem Hauptbremszylinder abzuschalten, so dass auch der Bremsdruck in den Radbremsen sinkt.

Die Erfindung weist somit insbesondere den Vorteil auf, dass die mittlere Bremswirkung während eines durch die FBS-Funktion unterstützten Bremsvorgangs erhöht und der Bremsweg des Fahrzeugs verringert wird. Ferner werden die Phasen, in denen die Energieversorgungseinheit in Betrieb ist, verlängert, so dass spürbare Pedalrückwirkungen beim An- und Abschalten der Pumpe seltener werden, was von dem Fahrer als eine Erhöhung des Bedienungskomforts der Bremsanlage angesehen wird.

In einer bevorzugten Ausführungsform der Erfindung ist es vorgesehen, dass die vorgegebene Zeitdauer eine Länge zwischen 100 ms und 1000 ms hat.

In einer besonders bevorzugten Ausführungsform der Erfindung hat die Zeitdauer eine Länge zwischen 400 ms und 600 ms.

Die verminderte Wirksamkeit der Bremsanlage wird in einer zweckmäßigen Ausgestaltung der Erfindung festgestellt, wenn der von dem Fahrer in dem Hauptbremszylinder eingestellte Bremsdruck eine in Abhängigkeit von einer Fahrzeugverzögerung ermittelten Aktivierungsschwelle überschreitet.

Weiterhin ist bei einer vorteilhaften Ausführungsform der Erfindung vorgesehen, dass es sich bei der Energieversorgungseinheit um eine durch einen Motor angetriebene Hydraulikpumpe handelt.

Ferner ist es vorzugsweise vorgesehen, dass die Energieversorgungseinheit Bestandteil eines ESP-Systems ist.

Die verminderte Wirksamkeit der Bremsanlage wird in einer zweckmäßigen Ausführungsform der Erfindung dann festgestellt, wenn der von dem Fahrer in dem Hauptbremszylinder eingestellte Bremsdruck einen in Abhängigkeit von einer Fahrzeugverzögerung ermittelten Aktivierungsschwellenwert überschreitet.

Ein weiterer Gegenstand der Erfindung ist eine Vorrichtung zum Erhöhen der Bremswirkung einer hydraulischen Bremsanlage eines Kraftfahrzeugs, umfassend einen Hauptbremszylinder, in dem ein auf wenigstens eine Radbremse übertragbarer Bremsdruck aufbaubar ist, einen Drucksensor, mit dem der Bremsdruck in dem Hauptbremszylinder erfassbar ist, ein mit dem Drucksensor verbundenes Steuergerät und eine durch das Steuergerät steuerbare Energieversorgungseinheit, die einschaltbar ist, wenn innerhalb des Steuergeräts erkannt wird, dass der Bremsdruck innerhalb des Hauptbremszylinders einen in Abhängigkeit von der Fahrzeugverzögerung berechneten Aktivierungsschwellenwert überschreitet.

Die Vorrichtung zeichnet sich dadurch aus, dass sie eine Verzögerungseinheit umfasst, die bei eingeschalteter Energieversorgungseinheit durch das Steuergerät aktivierbar ist, wenn der Bremsdruck einen vorgegebenen Schwellenwert erreicht, wobei mittels der Verzögerungseinheit nach Ablauf einer vorgegebenen Zeitdauer nach ihrem Einschalten ein Signal erzeugbar ist, welches zur Abschaltung der Energieversorgungseinheit führt.

Weitere Vorteile, Besonderheiten und zweckmäßige Weiterbildungen der Erfindung ergeben sich aus den Unteransprüchen und der nachfolgenden Darstellung bevorzugter Ausführungsbeispiele der Erfindung anhand der Figuren.

Von den Figuren zeigt
- Fig. 1: den prinzipiellen Aufbau einer zur Ausführung der Erfindung geeigneten Fahrzeugbremsanlage
- Fig. 2: ein Diagramm, in dem der zeitliche Verlauf des Bremsdrucks in einer Radbremse und dem Hauptbremszy- linder, die Aktivierungsschwelle der FBS-Funktion und die Aktivität der FBS-Funktion nach dem Stand der Technik dargestellt sind, und
- Fig. 3: ein Diagramm, in dem der zeitliche Verlauf des Bremsdrucks in einer Radbremse und dem Hauptbremszy- linder, die Aktivierungsschwelle der FBS-Funktion und die Aktivität der FBS-Funktion nach der Erfin- dung dargestellt sind.

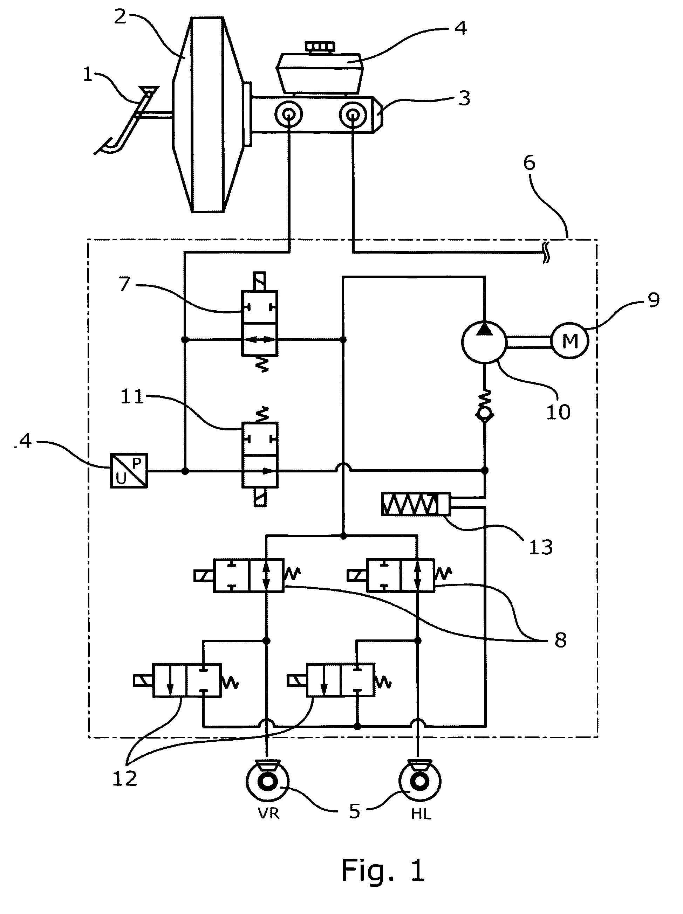

Die in der Figur 1 in einem Ausschnitt dargestellte, zur Ausführung der Erfindung geeignete Fahrzeugbremsanlage umfasst eine Betätigungseinrichtung 1, die über einen Bremskraftverstärker 2 mit einem Hauptbremszylinder 3 verbunden und vorzugsweise als Bremspedal ausgebildet ist.

Der Hauptbremszylinder 3 ist strömungsmäßig mit einem Vorratsbehälter 4 für Hydraulikflüssigkeit verbunden. Er ist vorzugsweise als so genannter Tandemhauptzylinder ausgeführt, bei dem jeweils eine von zwei gekoppelten Druckkammern zur Druckversorgung eines Bremskreises vorgesehen ist. Üblicherweise besteht dabei eine X-Aufteilung der Bremskreise, bei der eine Druckkammer die vordere rechte (VR) und die hintere linke (HL) Radbremse 5 versorgt und die andere Druckkammer die vordere linke und die hintere rechte Radbremse 5.

Der Hauptbremszylinder 3 verfügt dabei über zwei in Figur 1 nicht dargestellte, miteinander gekoppelte Kolben und zwei Druckkammern, in welche die Kolben bei einer Bremsbetätigung eingeführt werden. Bei gelöster Bremse besteht dabei eine Verbindung zwischen den Druckkammern und dem Vorratsbehälter 4, entweder direkt über eine Bohrung in der Druckkammer oder über ein Zentralventil in dem Kolben, welches bei unbetätigter Bremse geöffnet ist. Wird der mit einem Zentralventil versehene Kolben in die Druckkammer eingeführt, schließt sich das Zentralventil aufgrund des Gegendrucks in der Druckkammer und diese wird gegenüber dem Vorratsbehälter abgedichtet. Bei Druckkammern, die nicht über ein Zentralventil innerhalb des Kolbens verfügen überstreicht eine Manschette die Bohrung, über welche die Druckkammer mit dem Vorratsbehälter 4 in Verbindung steht und dichtet die Druckkammer gegenüber dem Vorratsbehälter ab.

Mit den Radbremsen 5 ist der Hauptbremszylinder 3 über eine Hydraulikeinheit 6 verbunden, die für jeden der beiden Bremskreise in gleicher Weise ausgebildet ist. In der Figur 1 ist daher nur der einem der Bremskreise zugeordnete Teil der Hydraulikeinheit dargestellt.

Die Radbremsen 5 sind dabei über ein stromlos offenes Trennventil 7 mit dem Hauptbremszylinder 3 verbunden, wobei jeder Radbremse 5 zusätzlich ein Einlassventil 8 zugeordnet ist, das ebenfalls stromlos geöffnet ist. Bei einem ausschließlich durch den Fahrer gesteuerten Bremsvorgang wird der von dem Fahrer mittels des Bremskraftverstärkers 2 in dem Hauptbremszylinder 3 aufgebaute Bremsdruck p_{THZ}, der auch als Vordruck bezeichnet wird, direkt zu den Radbremsen 5 übertragen.

Die dargestellte Bremskraftanlage ermöglicht jedoch ebenfalls einen fremdkraftgesteuerten Aufbau eines Bremsdrucks p_{Rad} in den Radbremsen 5 mittels der durch den Motor 9 angetriebenen Hydraulikpumpe 10. Zum Druckaufbau wird dabei das Trennventil 7 geschlossen und das stromlos geschlossene Umschaltventil 11 geöffnet, so dass zwischen dem Hauptbremszylinder 3 und der Saugseite der Hydraulikpumpe 10 eine Verbindung entsteht, und der Hauptbremszylinder 3 von der Druckseite der Hydraulikpumpe 10 entkoppelt wird. Die Hydraulikpumpe 10 ist damit in der Lage, Hydraulikflüssigkeit aus dem Hauptbremszylinder 3 bzw. dem Vorratsbehälter 4 in die Radbremsen 5 zu fördern, um den Radbremsdruck p_{Rad} zu erhöhen.

Zur Verringerung des Bremsdrucks p_{Rad} in den Radbremsen 5 ist jeder Radbremse 5 ein stromlos geschlossenes Auslassventil 12 zugeordnet. Wird das Auslassventil 12 geöffnet, kann Hydraulikflüssigkeit aus der entsprechenden Radbremse 7 in den Niederdruckspeicher 13 entweichen. Mittels der Hydraulikpumpe 10 kann die Hydraulikflüssigkeit aus dem Niederdruckspeicher 13 dann in den Hauptbremszylinder 3 zurückgefördert werden, wozu das Umschaltventil 11 sowie die Einlassventile 8 geschlossen werden und das Trennventil 7 geöffnet wird.

Darüber hinaus kann ein in den Radbremsen 5 vorhandener Bremsdruck p_{Rad} konstant gehalten werden, indem sowohl das der Radbremse 5 zugeordnete Einlassventil 8 als auch das zugehörige Auslassventil 12 geschlossen werden.

Der von dem Fahrer innerhalb des Hauptbremszylinders 3 eingestellte Bremsdruck p_{THZ} wird mittels eines Drucksensors 14 gemessen, dessen Signal an ein Steuergerät übermittelt wird, welches die Steuerung der Hydraulikeinheit 6 bzw. der enthaltenen Ventile 7, 8, 11 und 12 und des Motors 9 vornimmt.

In der dargestellten Weise ausgeführte Bremsanlagen sind dem Fachmann insbesondere als ein Bestandteil von ESP-Systemen (ESP: Elektronisches Stabilitätsprogramm) bekannt, die bereits in einer Vielzahl von Fahrzeugen eingesetzt werden. Ebenfalls können solche Bremsanlagen innerhalb eines ABS-Systems (ABS: Antiblockiersystem) genutzt werden.

Darüber hinaus lässt sich mit solchen Bremsanlagen auch die FBS-Funktion realisieren, die Ausgangspunkt der vorliegenden Erfindung ist.

Bei der FBS-Funktion ist es vorgesehen, dass die Radbremsen 5 mittels der Hydraulikpumpe 10 mit einem gegenüber der Fahrervorgabe erhöhten Bremsdruck p_{Rad} beaufschlagt werden, wenn während eines Bremsvorgangs eine verminderte Wirksamkeit der Bremsanlage festgestellt wird.

Dies entspricht der Aktivierung eines so genannten Bremsassistenten, dessen Funktion darin besteht, den Bremsdruck p_{Rad} in den Radbremsen 5 gegenüber dem Bremsdruck p_{THZ} zu erhöhen. Der Bremsassistent wird dabei insbesondere auch in Notbremssituationen aktiviert und ist dem Fachmann an sich ebenfalls bekannt.

Zur Aktivierung der FBS-Funktion wird in Abhängigkeit von der mittels eines Längsbeschleunigungssensors gemessenen und/oder aus den Signalen von Raddrehzahlsensoren ermittelten Fahrzeugverzögerung während eines Bremsvorgangs eine Aktivierungsschwelle p_{AS} für den Bremsdruck p_{THZ} innerhalb des Hauptbremszylinders 3 berechnet, wie es detailliert in der deutschen Offenlegungsschrift DE 102 38 427 A1 beschrieben wird, auf die hiermit im Zusammenhang mit der FBS-Funktion, insbesondere im Hinblick auf die Ermittlung des Aktivierungsschwellenwertes Bezug genommen wird.

Überschreitet der von dem Fahrer innerhalb des Hauptbremszylinders 3 eingestellte Bremsdruck p_{THZ} den Aktivierungsschwellenwert p_{AS}, so wird der Bremsassistent von einem Steuergerät, welches zur Ausführung der FBS-Funktion vorgesehen ist, aktiviert. Vorzugsweise ist der Bremsassistent dabei als so genannter hydraulischer Bremsassistent (HBA) ausgeführt, bei dem die Druckerhöhung mittels der Hydraulikeinheit 6, d.h. insbesondere mittels der durch den Motor 9 angetriebenen Hydraulikpumpe 10 vorgenommen wird, wozu der Motor 9 und die Ventile 7, 11 in der entsprechenden Weise von dem FBS-Steuergerät angesteuert werden (d.h. das Trennventil 7 geschlossen und das Umschaltventil 11 geöffnet wird.)

Der Bremsassistent wird deaktiviert, wenn der Bremsdruck p_{THZ} innerhalb des Hauptbremszylinders 3 bei aktivierter FBS-Funktion einen vorgegebenen Schwellenwert unterschreitet. Dies basiert darauf, dass der Bremswunsch des Fahrers von dem FBS-Steuergerät der FBS-Funktion anhand des Bremsdrucks p_{THZ} ermittelt wird, wobei bei sinkendem Bremsdruck p_{THZ} davon ausgegangen wird, dass der Fahrer die Bremse löst.

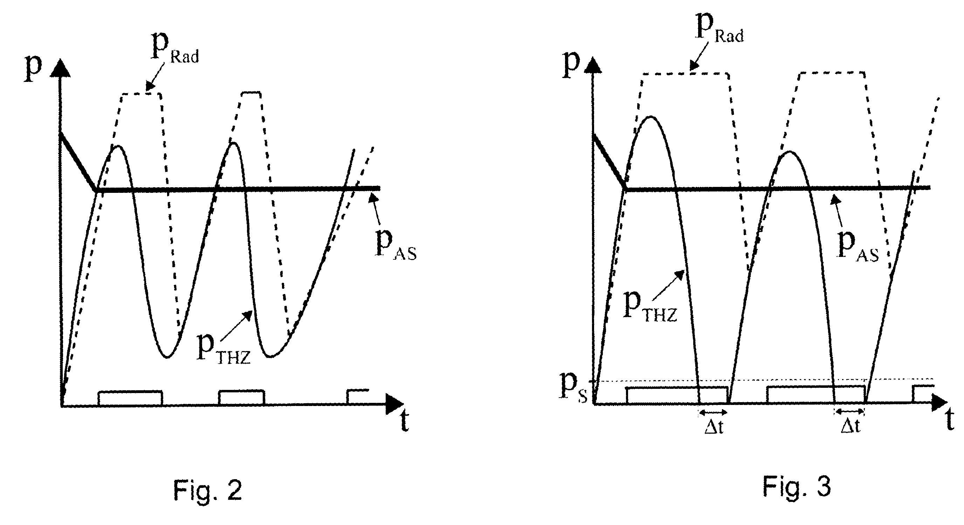

Bei eingeschalteter Hydraulikpumpe 10 sinkt der Bremsdruck p_{THZ} innerhalb des Hauptbremszylinders 3 jedoch auch, ohne dass der Fahrer die Bremse löst, da Hydraulikflüssigkeit durch die Hydraulikpumpe 10 aus dem Hauptbremszylinder 3 abgesaugt wird, was im Folgenden anhand der Figur 2 näher dargestellt wird.

In dem Diagramm in Figur 2 sind die zeitlichen Verläufe des Bremsdrucks p_{THZ} innerhalb des Hauptbremszylinders 3 und der Radbremsdrücke p_{Rad} sowie der Aktivierungsschwelle p_{AS}, die sich bei der bekannten FBS-Funktion ergeben, dargestellt. Ferner wird veranschaulicht, in welchen Zeiträumen die FBS-Funktion aktiviert bzw. die Hydraulikpumpe 10 angeschaltet ist (FBS aktiv).

In Figur 2 ist erkennbar, dass die Aktivierung der FBS-Funktion erfolgt, sobald der Bremsdruck p_{THZ}, die Aktivierungsschwelle p_{AS} überschreitet. In der Folge wird in den Radbremsen 5 ein Bremsdruck p_{Rad} aufgebaut, der gegenüber dem von dem Fahrer eingestellten Bremsdruck p_{THZ} erhöht ist. Dies geschieht dadurch, dass mittels der Hydraulikpumpe 10 Hydraulikflüssigkeit aus dem Hauptbremszylinder 3 gesaugt und in die Radbremsen 5 gepumpt wird, wodurch der Bremsdruck p_{THZ} innerhalb des Hauptbremszylinders 3 abfällt. Durch ein in die Hydraulikeinheit 6 integriertes und in Fig. 1 nicht dargestelltes Druckbegrenzungsventil wird dabei der Radbremsdruck p_{Rad} auf einen vorgegebenen Maximalwert begrenzt.

Der FBS-Eingriff wird durch ein Abschalten der Hydraulikpumpe 10 beendet, wenn der Bremsdruck p_{THZ} einen vorgegebenen, in Figur 2 nicht dargestellten Schwellenwert unterschreitet. Bei abgeschalteter Hydraulikpumpe 10 strömt Hydraulikflüssigkeit aus den Radbremsen 5 in den Hauptbremszylinder 3 zurück, so dass sich der Bremsdruck p_{THZ} wieder erhöht.

Setzt der Fahrer die Bremsenbetätigung fort, überschreitet der Bremsdruck p_{THZ} dabei erneut den Aktivierungsschwellenwert p_{AS}, und die FBS-Funktion wird durch ein erneutes Einschalten der Hydraulikpumpe 10 wieder aktiviert, wie es in dem Diagramm in Figur 2 dargestellt ist.

Die dargestellte Abfolge wiederholt sich zyklisch, bis der Fahrer das Bremspedal löst, so dass die FBS-Funktion während eines Bremsvorgangs abwechselnd aktiviert und deaktiviert wird, wobei die Frequenz durch den periodischen Verlauf des Bremsdrucks p_{THZ} innerhalb des Hauptbremszylinders 3 gegeben ist.

Im Rahmen der Erfindung ist es nun vorgesehen, dass die Hydraulikpumpe 10 nach einem Druckabfall in dem Hauptbremszylinder 3 für eine vorgegebene Zeitdauer Δt weiter in Betrieb gegehalten wird, um die Phasen zu verlängern, in denen die FBS-Funktion während eines Bremsvorgangs aktiviert ist.

Dazu wird bei aktivierter FBS-Funktion überprüft, ob der Bremsdruck p_{THZ} innerhalb des Hauptbremszylinders 3 einen vorgegebenen Schwellenwert p_{S} erreicht, der beispielsweise bei einem Bremsdruck p_{THZ} nahe einem Wert von 0 bar liegen kann. Ist dies der Fall, wird eine Verzögerungseinheit innerhalb des FBS-Steuergerätes in Gang gesetzt, die nach einer vorgegebenen, mit dem Unterschreiten des Schwellenwertes beginnenden Zeitdauer Δt ein Signal erzeugt, welches zur Abschaltung der Hydraulikpumpe 10 führt.

Die vorgegebene Zeitdauer liegt dabei zwischen 100 ms und 1000 ms und vorzugsweise zwischen 400 ms und 600 ms. Ein besonders bevorzugter Wert für die Zeitdauer sind 500 ms.

In dem Diagramm in Figur 3 ist dieses Vorgehen anhand der zeitlichen Verläufe des Bremsdrucks p_{THZ} innerhalb des Hauptbremszylinders 3 und des Radbremsdrucks p_{Rad} sowie des Aktivierungsschwellenwertes p_{AS} dargestellt. Die Zeiträume, in denen die FBS-Funktion aktiv bzw. die Hydraulikpumpe 10 angeschaltet ist, sind hier ebenfalls dargestellt (FBS-aktiv), genauso wie der Schwellenwert p_{S} und die Zeitdauer Δt.

Wie in Figur 3 erkennbar ist, wird dabei die FBS-Funktion aktiviert, wenn der Bremsdruck p_{THZ} innerhalb des Hauptbremszylinders 3 die Aktivierungsschwelle p_{AS} überschreitet, wie es auch bei der bekannten Ausführungsform der FBS-Funktion vorgesehen ist.

Wenn der Bremsdruck p_{THZ} aufgrund des Absaugens von Hydraulikflüssigkeit aus dem Hauptbremszylinder 3 den Schwellenwert p_{S} erreicht, wird der FBS-Eingriff im Rahmen der vorliegenden Erfindung jedoch im Gegensatz zu der bekannten Ausführungsform der FBS-Funktion für die Zeitdauer Δt fortgesetzt.

Bei dem Abfall des Bremsdrucks p_{THZ} entsteht hierbei ein Unterdruck in dem Hauptbremszylinder 3 so dass sich eine bei betätigter Bremse zwischen dem Hauptbremszylinder 3 und dem Vorratsbehälter 4 bestehende Abdichtung öffnet. Bei Hauptbremszylindern 3 mit einem in dem Kolben angeordneten Zentralventil welches die Druckkammer von dem Vorratsbehälter 4 trennt, öffnet dabei das Zentralventil, wenn in der Druckkammer ein Unterdruck gegenüber dem Vorratsbehälter 4 besteht. Bei Hauptbremszylindern 3, bei den die Druckkammer mittels einer Manschette von dem Vorratsbehälter abgetrennt wird, erfolgt bei einem Unterdruck in der Druckkammer ein "Umklappen" der Manschette.

In der Folge strömt Hydraulikflüssigkeit aus dem Vorratsbehälter 4 in den Hauptbremszylinder 3, die mittels der Hydraulikpumpe 10 in die Radbremsen 5 gepumpt wird, um den Wert des Radbremsdrucks p_{Rad} aufrecht zu erhalten. Die Hydraulikpumpe 10 saugt somit über den Hauptbremszylinder 3 Hydraulikflüssigkeit aus dem Vorratsbehälter 4 an.

Erst nach Ablauf der Zeitdauer Δt wird die Hydraulikpumpe 10 abgeschaltet und der FBS-Eingriff auf diese Weise beendet. Nach dem Abschalten der Hydraulikpumpe 10 strömt Hydraulikflüssigkeit aus den Radbremsen 5 zurück in den Hauptbremszylinder 3, wodurch sich der Bremsdruck p_{THZ} in dem Hauptbremszylinder 3 erhöht.

Überschreitet der Bremsdruck p_{THZ} dabei wiederum die Aktivierungsschwelle, so wird die FBS-Funktion wieder aktiviert bzw. die Hydraulikpumpe 10 erneut angeschaltet.

Somit ergibt sich auch bei der Erfindung eine taktweise Aktivierung der FBS-Funktion während eines Bremsvorgangs. Die Erfindung hat jedoch den Vorteil, dass die Phasen, in denen die FBS-Funktion aktiviert ist, verlängert werden, so dass die FBS-Funktion während des Bremsvorgangs insgesamt länger aktiviert ist.

Hierdurch ergibt sich eine höhere Bremswirkung bei einem Bremsvorgang in einer Situation, in der die Wirksamkeit der Bremsanlage verringert ist. Damit wird eine wesentliche Verkürzung des Bremswegs erreicht und die Fahrzeugsicherheit erhöht.

### Bezugszeichenliste:

- 1: Betätigungseinrichtung
- 2: Bremskraftverstärker
- 3: Hauptbremszylinder
- 4: Vorratsbehälter
- 5: Radbremse
- 6: Hydraulikeinheit
- 7: Trennventil
- 8: Einlassventil
- 9: Motor
- 10: Hydraulikpumpe
- 11: Umschaltventil
- 12: Auslassventil
- 13: Niederdruckspeicher
- 14: Drucksensor

- p: Druck
- p_{AS}: Aktivierungsschwelle der FBS-Funktion
- p_{Rad}: Bremsdruck in den Radbremsen
- p_{THZ}: Bremsdruck im Hauptbremszylinder
- p_{S}: vorgegebener Schwellenwert
- t: Zeit
- Δt: vorgegebene Zeitdauer

## Patentansprüche

1. Verfahren zum Erhöhen der Bremswirkung bei einem Kraftfahrzeug mit einer hydraulischen Bremsanlage, bei dem im Falle einer verminderten Wirksamkeit der Bremsanlage durch ein Einschalten einer Energieversorgungseinheit ein Bremsdruck in wenigstens einer Radbremse erhöht wird, **dadurch gekennzeichnet, dass** bei eingeschalteter Energieversorgungseinheit (9, 10) überprüft wird, ob ein Bremsdruck (p_{THZ}) in einem Hauptbremszylinder (3) einen vorgegebenen Schwellenwert (p_{S}) erreicht, und dass die Energieversorgungseinheit (9, 10) nach Ablauf einer vorgegebenen Zeitdauer (Δt), die zu dem Zeitpunkt beginnt, zu dem festgestellt wird, dass der Bremsdruck (p_{THZ}) den vorgegebenen Schwellenwert (p_{S}) erreicht, abgeschaltet wird.

2. Verfahren nach Anspruch 1, **dadurch gekennzeichne**t, dass die vorgegebene Zeitdauer (Δt) eine Länge zwischen 100 ms und 1000 ms hat.

3. Verfahren nach einem der Ansprüche 1 und 2, **dadurch gekennzeichnet, dass** die vorgegebene Zeitdauer (Δt) eine Länge zwischen 400 ms und 600 ms hat.

4. Verfahren nach einem der vorangegangenen Ansprüche, **dadurch gekennzeichnet, dass** eine verminderte Wirksamkeit der Bremsanlage festgestellt wird, wenn der von dem Fahrer in dem Hauptbremszylinder (3) eingestellte Bremsdruck (p_{THZ}) eine in Abhängigkeit von einer Fahrzeugverzögerung ermittelten Aktivierungsschwelle (p_{AS}) überschreitet.

5. Verfahren nach einem der vorangegangenen Ansprüche,
**dadurch gekennzeichnet, dass** es sich bei der Energieversorgungseinheit (9, 10) um eine durch einen Motor (9) angetriebene Hydraulikpumpe (10) handelt.

6. Verfahren nach einem der vorangegangenen Ansprüche,
**dadurch gekennzeichnet, dass** die Energieversorgungseinheit (9, 10) Bestandteil eines ESP-Systems ist.

7. Vorrichtung zum Erhöhen der Bremswirkung einer hydraulischen Bremsanlage eines Kraftfahrzeugs, umfassend einen Hauptbremszylinder, in dem ein auf wenigstens eine Radbremse übertragbarer Bremsdruck aufbaubar ist, einen Drucksensor, mit dem der Bremsdruck in dem Hauptbremszylinder erfassbar ist, ein mit dem Drucksensor verbundenes Steuergerät und eine durch das Steuergerät steuerbare Energieversorgungseinheit, die einschaltbar ist, wenn innerhalb des Steuergeräts erkannt wird, dass der Bremsdruck innerhalb des Hauptbremszylinders einen in Abhängigkeit von der Fahrzeugverzögerung berechneten Aktivierungsschwellenwert überschreitet, **dadurch gekennzeichnet, dass** sie eine Verzögerungseinheit umfasst, die bei eingeschalteter Energieversorgungseinheit (9,10) durch das Steuergerät aktivierbar ist, wenn der Bremsdruck (p_{THZ}) einen vorgegebenen Schwellenwert (p_{S}) erreicht, wobei mittels der Verzögerungseinheit nach Ablauf einer vorgegebenen Zeitdauer (Δt) nach ihrem Einschalten ein Signal erzeugbar ist, welches zur Abschaltung der Energieversorgungseinheit (9, 10) führt.

## Claims

1. Method for increasing the braking effectiveness in a motor vehicle having a hydraulic brake system, in which method a brake pressure in at least one wheel brake is increased in the event of reduced effectiveness of the brake system by switching on a power supply unit
**characterized in that** when the power supply unit (9, 10) is switched on, checking is carried out to determine whether a brake pressure (p_{THZ}) in a master brake cylinder (3) reaches a predefined threshold value (pₛ), and **in that** the power supply unit (9, 10) is switched off after the expiry of a predefined time period (Δt) which starts at the time at which it is detected that the brake pressure (p_{THZ}) reaches the predefined threshold value (pₛ).

2. Method according to Claim 1, **characterized in that** the predefined time period (Δt) has a length between 100 ms and 1000 ms.

3. Method according to one of Claims 1 and 2, **characterized in that** the predefined time period (Δt) has a length between 400 ms and 600 ms.

4. Method according to one of the preceding claims, chacterized in that reduced effectiveness of the brake system is detected if the brake pressure (p_{THZ}) which is set in the master brake cylinder (3) by the driver exceeds an activation threshold (p_{AS}) which is determined as a function of a vehicle deceleration.

5. Method according to one of the preceding claims, **characterized in that** the power supply unit (9, 10) is a hydraulic pump (10) which is driven by a motor (9).

6. Method according to one of the preceding claims, **characterized in that** the power supply unit (9, 10) is a component of an ESP system.

7. Device for increasing the braking effectiveness of a hydraulic brake system of a motor vehicle, comprising a master brake cylinder in which a brake pressure which can be transmitted to at least one wheel brake can be built up, a pressure sensor with which the brake pressure in the master brake cylinder can be sensed, a control device which is connected to the pressure sensor and a power supply unit which can be controlled by the control device and which can be switched on if it is detected within the control device that the brake pressure within the master brake cylinder exceeds an activation threshold value which is calculated as a function of the vehicle deceleration, **characterized in that** the said device comprises a deceleration unit which, when the power supply unit (9, 10) is switched on, can be activated by the control device if the brake pressure (p_{THZ}) reaches a predefined threshold value (pₛ), wherein after the expiry of a predefined time period (Δt) after the deceleration unit has been switched on said deceleration unit can generate a signal which brings about the switching off of the power supply unit (9, 10).

## Revendications

1. Procédé d'augmentation de l'effet de freinage sur un véhicule automobile doté d'une installation hydraulique de freinage, dans lequel, le branchement d'une unité en alimentation en énergie augmente la pression de freinage dans au moins un frein de roue en cas de diminution de l'efficacité de l'installation de freinage, **caractérisé en ce que** lorsque l'unité (9, 10) d'alimentation en énergie est raccordée, le procédé vérifie si la pression de freinage (p_{THZ}) qui règne dans un cylindre principal de frein (3) atteint une valeur de seuil (p_{S}) prédéterminée et **en ce que** l'unité (9, 10) d'alimentation en énergie est débranchée après qu'une durée prédéterminée (Δt) qui commence à l'instant auquel où il est constaté que la pression de freinage (P_{THZ}) a atteint la valeur de seuil prédéterminée (pₛ).

2. Procédé selon la revendication 1, **caractérisé en ce que** la durée prédéterminée (Δt) a une longueur comprise entre 100 ms et 1 000 ms.

3. Procédé selon l'une des revendications 1 et 2, **caractérisé en ce que** la durée prédéterminée (Δt) a une longueur comprise entre 400 ms et 600 ms.

4. Procédé selon l'une des revendications précédentes, **caractérisé en ce qu'**il est constaté que l'installation de freinage est moins efficace si la pression de freinage (p_{THZ}) établie par le conducteur dans le cylindre principal de frein (3) dépasse un seuil d'activation (p_{AS}) déterminé en fonction du ralentissement du véhicule.

5. Procédé selon l'une des revendications précédentes, **caractérisé en ce que** l'unité (9, 10) d'alimentation en énergie est une pompe hydraulique (10) entraînée par un moteur (9).

6. Procédé selon l'une des revendications précédentes, **caractérisé en ce que** l'unité (9, 10) d'alimentation en énergie fait partie d'un système ESP.

7. Dispositif d'augmentation de l'effet de freinage d'une installation hydraulique de freinage d'un véhicule automobile, comprenant un cylindre principal de frein dans lequel une pression de freinage qui peut être transférée à au moins un frein de roue peut être établie, un détecteur de pression par lequel la pression de freinage qui règne dans le cylindre principal de frein peut être détectée, un appareil de commande relié au détecteur de pression et une unité d'alimentation en énergie qui peut être commandée par l'appareil de commande et qui peut être branchée si il est détecté à l'intérieur de l'appareil de commande que la pression de freinage qui règne à l'intérieur du cylindre principal de frein dépasse une valeur de seuil d'activation calculée en fonction du ralentissement du véhicule,
**caractérisé en ce qu'**il comprend une unité de ralentissement qui, lorsque l'unité (9, 10) d'alimentation en énergie est branchée, peut être activée par l'appareil de commande si la pression de freinage (p_{THZ}) atteint une valeur de seuil (p_{S}) prédéterminée, un signal qui entraîne le débranchement de l'unité (9, 10) d'alimentation en énergie pouvant être formé au moyen de l'unité de ralentissement après qu'une durée prédéterminée (Δt) s'est écoulée depuis son branchement.
